# EUROPÄISCHE PATENTSCHRIFT

(11) **EP 2 409 127 B1**
(45) Veröffentlichungstag und Bekanntmachung des Hinweises auf die Patenterteilung: **30.01.2013**
(21) Anmeldenummer: 10709490.6
(22) Anmeldetag: 16.03.2010
(51) Int. Cl.: G01M 1/22, G01M 15/14, F01D 5/02

(54) **VERFAHREN UND VORRICHTUNG ZUM MESSEN PHYSIKALISCHER EIGENSCHAFTEN AN EINER TURBOLADER-RUMPFGRUPPE**
METHOD AND DEVICE FOR MEASURING PHYSICAL PROPERTIES ON A TURBOCHARGER CORE ASSEMBLY
PROCÉDÉ ET DISPOSITIF POUR MESURER DES PROPRIÉTÉS PHYSIQUES D'UN NOYAU DE TURBOCOMPRESSEUR

(30) Priorität: 18.03.2009 DE 102009013432
(43) Veröffentlichungstag der Anmeldung: 25.01.2012
(73) Patentinhaber: Schenck RoTec GmbH, 64293 Darmstadt (DE)
(72) Erfinder: THELEN, Dieter, 64397 Modautal (DE); LEHMANN, Jürgen, 64686 Lautertal (DE)
(74) Vertreter: Haar, Lucas Heinz Jörn
(86) Internationale Anmeldenummer: PCT/EP2010/053338
(87) Internationale Veröffentlichungsnummer: WO 2010/106045

(56) Entgegenhaltungen:
- US-A- 4 864 859
- US-A1- 2008 289 416

## Beschreibung

Die Erfindung betrifft ein Verfahren zum Messen physikalischer Eigenschaften an einer Turbolader-Rumpfgruppe, die ein Mittelgehäuse und einen Rotor mit einem Turbinenrad, einem Verdichterrad und einer in dem Mittelgehäuse gelagerten Welle umfasst, bei welchem Verfahren die Turbolader-Rumpfgruppe in eine Unwuchtmessvorrichtung eingespannt und mit einem Verdichtergehäuse verbunden wird, der Rotor auf eine im wesentlichen normale Arbeitsgeschwindigkeit beschleunigt wird und durch Unwucht induzierte Schwingungen der Turbolader-Rumpfgruppe gemessen werden. Die Erfindung betrifft weiterhin eine Vorrichtung zur Durchführung des Verfahrens.

Abgasgetriebene Turbolader haben einen Rotor, der im Betrieb mit einer sehr hohen Drehzahl von oft über 100.000 Umdrehungen pro Minute dreht und daher zur Vermeidung von Geräuschen und zu hohen Lagerbelastungen sehr genau ausgewuchtet werden muss. Der Rotor besteht in der Regel aus einer in einem Lagergehäuse gelagerten Welle, die an einem Ende ein Turbinenrad und am anderen Ende ein Verdichterrad trägt. Die Messung der Unwucht des Rotors erfolgt aus Genauigkeitsgründen in der Regel bei einer im wesentlichen der normalen Arbeitsgeschwindigkeit entsprechenden Winkelgeschwindigkeit. Für die Geräuschentwicklung von Abgasturboladern sind auch Druckpulsationen im komprimierten Luftstrom hinter dem Verdichter von großer Bedeutung. Die Beurteilung der schwingungstechnischen Qualität von Turboladern erfordert daher, diese Druckpulsationen zu messen und zur Beurteilung heranzuziehen. Um zu vermeiden, dass die Messung der Unwucht und die Messung der Druckpulsationen einander stören, ist es seither üblich, beide Messungen in verschiedenen Messanordnungen nacheinander durchzuführen. Dies verursacht aber einen erheblichen Aufwand an Zeit und Material.

Aus EP 0 426 676 B1 ist ein Verfahren der angegebenen Art zum dynamischen Ausgleich der Unwucht eines Hochgeschwindigkeitsrotors eines abgasangetriebenen Turboladers bekannt, bei dem das Turbolader-Mittelgehäuse, in dem der Rotor gelagert ist, mit einem das Turbinenrad und einem das Verdichterrad umschließenden Gehäuse fest verbunden wird und die so gebildete Einheit mit Hilfe von biegsamen Balgschläuchen, die an den beiden Gehäusen angreifen, in einem Rahmen in allen drei Raumrichtungen bewegbar weich gelagert wird. An den Gehäuseteilen sind Beschleunigungsaufnehmer angeordnet, deren Beschleunigungssignale in Verbindung mit einem optisch gemessenen Phasenwinkel zur Bestimmung von Größe und Lage der Unwucht verarbeitet werden.

Andere Dokument des Standesder Technik sind US2008/298416 und US48648559.

Der Erfindung liegt die Aufgabe zugrunde, ein Verfahren der eingangs genannten Art anzugeben, welches sich durch einen geringen Aufwand an Zeit und Material für die Messung von Unwucht und Druckpulsationen auszeichnet, einfach durchführbar ist und Messungen von großer Genauigkeit unter betriebsnahen Bedingungen ermöglicht. Es ist weiterhin Aufgabe der Erfindung, eine zur Durchführung des Verfahrens besonders geeignete Vorrichtung zu schaffen.

Die genannte Aufgabe wird nach der Erfindung durch das in Patentanspruch 1 angegebene Verfahren und hinsichtlich der Vorrichtung durch die in Patentanspruch 3 angegebenen Merkmale gelöst. Vorteilhafte Ausgestaltungen des Verfahrens sind in Anspruch 2 und der Vorrichtung in den Ansprüchen 4 bis 9 angegeben.

Nach der Erfindung ist bei einem Verfahren zum Messen physikalischer Eigenschaften an einer Turbolader-Rumpfgruppe, die ein Mittelgehäuse und einen Rotor mit einem Turbinenrad, einem Verdichterrad und einer in dem Mittelgehäuse gelagerten Welle umfasst, und bei welchem die Turbolader-Rumpfgruppe in eine Unwuchtmessvorrichtung eingespannt und mit einem Verdichtergehäuse verbunden wird, der Rotor auf eine im wesentlichen normale Arbeitsgeschwindigkeit beschleunigt wird und durch Unwucht induzierte Schwingungen der Turbolader-Rumpfgruppe gemessen werden, vorgesehen, dass der bei beschleunigtem Rotor komprimierte Luftstrom am Ausgang des Verdichtergehäuses durch ein Messrohr geleitet wird und Druckpulsationen im komprimierten Luftstroms gemessen und ausgewertet werden.

Das erfindungsgemäße Verfahren ermöglicht gleichzeitig eine Messung der Unwucht eines Turboladerrotors und der Druckpulsationen im Verdichterauslass unter betriebsähnlichen Bedingungen. Dies bedeutet einen Gewinn an Zeit und Einsparung von Material. Der Anschluss des Messrohrs an das Verdichtergehäuse kann mittels eines flexiblen Zwischenstücks erfolgen. Die schwingfähige Masse des schwingenden Systems zur Messung der Unwucht bleibt daher vorteilhaft klein, so dass vorteilhaft große Schwingungsamplituden erzielt werden können.

Eine bevorzugte Ausgestaltung des Verfahrens umfasst die Schritte: Lagerung des Mittelgehäuses mit dem das Verdichterrad umgebenden Verdichtergehäuse mittels weicher Federn in wenigstens zwei Raumrichtungen bewegbar an einem Maschinenbett, Verbinden des Ausgangs des Verdichtergehäuses durch ein flexibles Zwischenstück mit dem am Maschinenbett befestigten Messrohr, Anordnen eines das Turbinenrad umgebenden Turbinengehäuses an der Turbinenseite des Mittelgehäuses, Verbinden des Turbinengehäuses mit einer Druckluftquelle und Beschleunigen des Rotors durch Antreiben des Turbinenrads mit Druckluft auf eine im wesentlichen normale Arbeitsgeschwindigkeit, Messen der durch Unwucht induzierten Schwingungen des Mittelgehäuses und der Druckpulsationen im Messrohr, während der Rotor mit einer im wesentlichen normalen Arbeitsgeschwindigkeit dreht, Bestimmung der Phasenlage der durch Unwucht induzierten Schwingungen zur Winkellage des Rotors bei den Messdrehzahlen, bei denen die durch Unwucht induzierten Schwingungen gemessen werden, Verwendung der gemessenen, durch Unwucht induzierten Schwingungen und der Phasenlage, um die auszugleichende Unwucht des Rotors zu bestimmen, Vergleichen der gemessenen Druckpulsationen mit vorgegebenen Vergleichswerten zur Bestimmung eines Qualitätskennwerts.

Nach der Erfindung umfasst die Vorrichtung zum Messen der Unwucht des Rotors einer Turbolader-Rumpfgruppe, bei welcher der Rotor ein Turbinenrad, ein Verdichterrad und eine Welle aufweist, die in einem Mittelgehäuse der Turbolader-Rumpfgruppe gelagert ist, eine das Mittelgehäuse aufnehmende Lagerung, die mittels weicher Federn in wenigstens zwei Raumrichtungen bewegbar an einem Maschinenbett abgestützt ist, ein zur Aufnahme des Verdichterrads ausgebildetes Verdichtergehäuse, das mittels einer Spannvorrichtung an dem Mittelgehäuses festspannbar ist, eine Einrichtung zum Beschleunigen des Rotors auf eine im wesentlichen normale Arbeitsgeschwindigkeit, Schwingungsaufnehmer zum Messen der durch Unwucht induzierten Schwingungen des Mittelgehäuses und ein Messrohr, das über ein flexibles Zwischenstück mit dem Ausgang des Verdichtergehäuses verbunden ist und einen Druckaufnehmer zum Messen von Druckpulsationen eines durch das Messrohr geleiteten Luftstroms aufweist. Das Turbinengehäuse kann hierbei in einem Bewegungen des Mittelgehäuses und des Turbinenrads in den wenigstens zwei Raumrichtungen zulassenden Abstand von diesen angeordnet und am Maschinenbett befestigt sein. Die erfindungsgemäße Vorrichtung ist einfach und kostengünstig herstellbar und ermöglicht eine gleichzeitige Messung der Rotorunwucht und der Druckpulsationen am Ausgang des Verdichters.

Die Erfindung wird nachfolgend anhand von Ausführungsbeispielen näher erläutert, die in der Zeichnung dargestellt sind. Es zeigen
- Figur 1: schematisch die Gestaltung einer Unwuchtmessvorrichtung mit darin angeordneter Turbolader-Rumpfgruppe,
- Figur 2: einen Längsschnitt eines Messrohrs und eines das Messrohr mit dem Ausgang des Verdichtergehäuses verbindenden Zwischenstücks und
- Figur 3: einen Querschnitt entlang der Linie III - III in Figur 2.

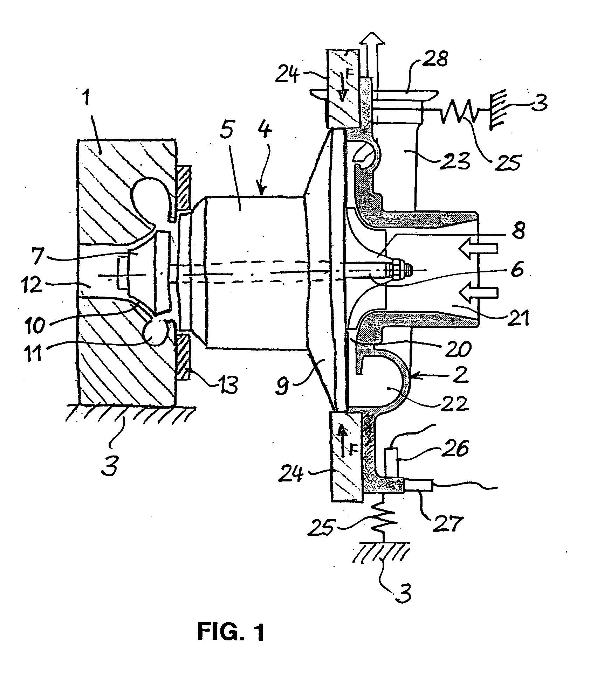

Die in Figur 1 dargestellte Unwuchtmessvorrichtung umfasst ein Turbinengehäuse 1, ein Verdichtergehäuse 2 und ein Maschinenbett 3, von welchem nur die relevanten Befestigungsstellen dargestellt sind. Die Unwuchtmessvorrichtung ist zur Aufnahme einer Turbolader-Rumpfgruppe 4 eingerichtet, die ein Mittelgehäuse 5 mit einem darin gelagerten Rotor 6 umfasst, der an seinem einen Ende ein Turbinenrad 7 und an seinem anderen Ende ein Verdichterrad 8 trägt. Das Mittelgehäuse 5 hat auf der dem Verdichterrad 8 zugewandten Seite einen tellerförmigen Flansch 9, an dem die Turbolader-Rumpfgruppe 4 gespannt werden kann.

Das Turbinengehäuse 1 bildet eine Turbinenkammer 10, einen diese umgebenden Spiralkanal 11 und einen zentralen Auslasskanal 12. An der dem Verdichtergehäuse 2 zugekehrten Seite des Turbinengehäuses 1 ist eine Begrenzungsvorrichtung 13 angeordnet, welche die Öffnung für das Einsetzen des Turbinenrads 7 in die Turbinenkammer 10 umgibt und vorzugsweise aus einem stoßdämpfenden Material besteht.

Das Turbinengehäuse 1 ist durch starre Befestigungsmittel mit dem Maschinenbett 3 verbunden. Die Befestigungsmittel können lösbar und nach dem Lösen in axialer Richtung bewegbar ausgebildet sein, um den Abstand zwischen dem Turbinengehäuse 1 und dem Verdichtergehäuse 2 auf das für die Unwuchtmessung oder zum Einsetzen und Entnehmen jeweils erforderliche Maß ändern zu können. Alternativ kann auch die Lagerung des Verdichtergehäuses 2 mit einer zur Änderung des Abstands erforderlichen Bewegbarkeit ausgebildet sein.

Das Verdichtergehäuse 2 weist auf der dem Turbinengehäuse 1 zugekehrten Seite eine Verdichterkammer 20 mit einem zentralen Einlasskanal 21 und einem Spiralkanal 22 auf, der sich an den radial äußeren Rand der Verdichterkammer 20 anschließt und in einen Auslasskanal 23 mündet. Das Verdichtergehäuse 2 ist weiterhin mit einer Spannvorrichtung 24 mit radial bewegbaren Spannelementen zum Festspannen des Mittelgehäuses 5 versehen. Das Verdichtergehäuse 2 ist sowohl in radialer als auch in axialer Richtung mittels weicher Federn 25 am Maschinenbett 3 abgestützt und gehalten. Zur Erfassung von Schwingungen sind an dem Verdichtergehäuse 2 Schwingungsaufnehmer 26, 27 angebracht, welche Schwingungen in axialer und radialer Richtung zur Rotorachse aufnehmen können.

Alternativ zu der beschriebenen Anordnung kann vorgesehen sein, dass das Turbinengehäuse 1 am Maschinenbett 3 federnd gelagert ist und Mittel zum Festspannen des Mittelgehäuses 5 aufweist, wobei das Verdichtergehäuse 2 entweder fest oder flexibel mit dem Mittelgehäuse 5 verbunden werden kann.

Zur Unwuchtmessung wird die Turbolader-Rumpfgruppe 4, wie in der Zeichnung gezeigt, mit dem Verdichterrad 8 in das Verdichtergehäuse 2 eingesetzt und mit Hilfe der Spannvorrichtung 24 an dem Flansch 9 gespannt. Das Mittelgehäuse 5 ist hierdurch starr mit dem Verdichtergehäuse 2 verbunden und der äußere Rand des Flansches 9 liegt dicht an dem Verdichtergehäuse 2 an.

Für das Einsetzen der Turbolader-Rumpfgruppe 4 in die Vorrichtung und das Anbringen an dem Verdichtergehäuse 2 wird zuvor das Turbinengehäuse 1 vom Maschinenbett 3 gelöst und vom Verdichtergehäuse 2 axial soweit entfernt, bis der für das Einsetzen notwendige Freiraum zwischen Turbinen- und Verdichtergehäuse besteht. Nach dem Festspannen der Turbolader-Rumpfgruppe 4 an dem Verdichtergehäuse 2 wird das Turbinengehäuse 1 in die in der Zeichnung dargestellte Position zurückgebracht und am Maschinenbett 3 befestigt. In dieser Position hat das Turbinengehäuse 1 gegenüber dem Turbinenrad 7 und gegenüber dem Mittelgehäuse 5 einen solchen Abstand, dass es infolge der während eines Messlaufs auftretenden Schwingungen nicht zu einer Berührung zwischen Turbinengehäuse 1 einerseits und Turbinenrad 7 und Mittelgehäuse 5 andererseits kommt. Vor zu großen Schwingungsamplituden schützt außerdem die Begrenzungsvorrichtung 13, an der das Mittelgehäuse 5 anstößt, bevor das Turbinenrad 7 die Wand der Turbinenkammer 10 berühren kann.

Zur Messung einer Unwucht des Rotors 6 wird das Turbinenrad 7 mit Druckluft angetrieben und der Rotor 6 bis auf eine im wesentlichen seiner normalen Arbeitsgeschwindigkeit entsprechenden Drehzahl beschleunigt. Zur Vermeidung von Blasgeräuschen kann am Turbinengehäuse 1 eine flexible Dichtung angebracht sein, die sich dichtend an das Mittelgehäuse 5 anlegt.

Durch eine vorhandene Unwucht des beschleunigten Rotors 6 werden in die schwingende Masse aus Turbolader-Rumpfgruppe 4 und Verdichtergehäuse 2 Schwingungen induziert, die mit Hilfe der Schwingungsaufnehmer 26, 27 bei verschiedenen Drehzahlen gemessen werden. Gleichzeitig wird durch einen Drehwinkelgeber die jeweilige Phasenlage der gemessenen Schwingungen in Bezug auf den Rotor 6 bestimmt. Aus den gemessenen Werten wird dann mit Hilfe eines elektronische Rechners Winkellage und Größe der auszugleichenden Unwucht berechnet.

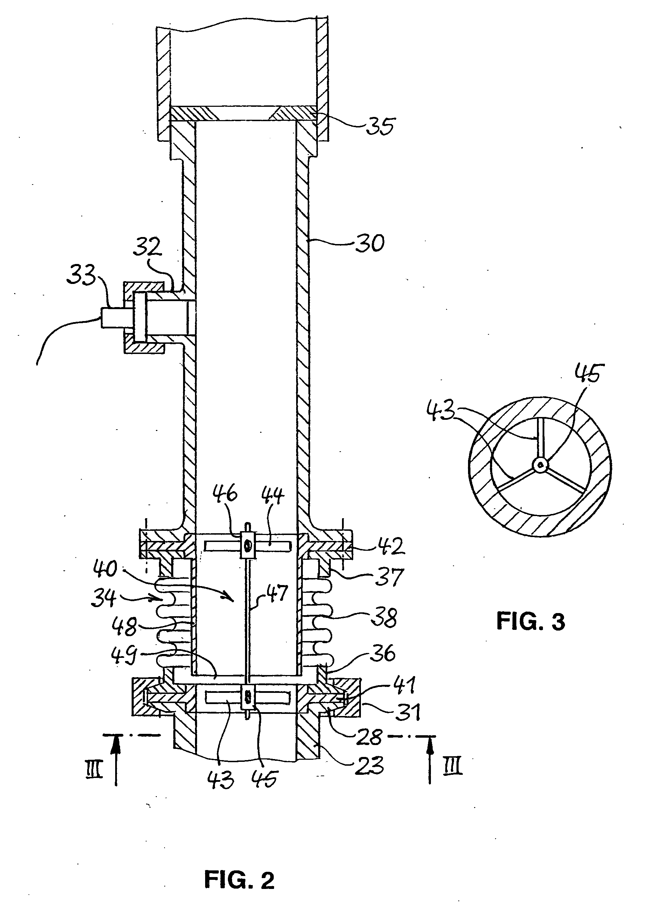

Um zeitgleich mit der Unwuchtmessung die Druckpulsationen im komprimierten Luftstrom hinter dem Ausgang des Verdichtergehäuses messen zu können, wird an den Auslasskanal 23 ein Messrohr angeschlossen. Der Auslasskanal 23 ist hierzu an seinem Ende mit einem Flansch 28 versehen, an den das in Figur 2 gezeigte Messrohr 30 mittels einer Flanschverbindung 31 angekuppelt werden kann. Das Messrohr 30 besteht aus einem starren Rohr von geeigneter Länge und hat etwa in seiner Mitte eine von einem Rohrstutzen 32 gebildete Öffnung, in der ein Druckaufnehmer 33 zur Erfassung des in dem Messrohr 30 herrschenden Drucks angeordnet ist. Das Messrohr wird an dem Maschinenbett befestigt. Das mit dem Auslasskanal 23 zu verbindende Ende des Messrohrs 30 ist mit einem flexiblen Zwischenstück 34 versehen. Hierdurch wird die angekuppelte Masse des Messrohrs 30 von dem Verdichtergehäuse schwingungsdynamisch entkoppelt, damit sie das Schwingungsverhalten der Turbolader-Rumpfgruppe 4 während der Unwuchtmessung nicht negativ beeinflussen kann. Das dem Zwischenstück 34 entgegengesetzte Ende des Messrohrs 30 ist mit einer Blende 35 versehen.

Das Zwischenstück 34 besteht aus zwei Ringflanschen 36, 37, die an dem entgegengesetzten Ende eines Faltenbalges 38 aus Metall durch Schweißen befestigt sind. Das Zwischenstück 34 weist außerdem eine elastische Fesselvorrichtung 40 auf, die eine Dehnung des Faltenbalges 38 in axialer Richtung bis auf ein geringes Maß einschränkt. Die Fesselvorrichtung 40 besteht aus zwei Ringscheiben 41, 42, von denen jeweils eine auf der dem Faltenbalg 38 abgekehrten Seite an einem Ringflansch 36 bzw. 37 anliegt. In ihren Bohrungen, deren Innendurchmesser dem Innendurchmesser des Messrohres 30 entspricht, weisen die Ringscheiben 41, 42 radiale Stege 43 bzw. 44 auf, die in der Mitte der Bohrungen der Ringscheiben 41, 42 an dort angeordneten Hülsen 45, 46 befestigt sind.

Die Stege 43, 44 bestehen aus einem dünnwandigen, federnden Material und haben einen rechteckigen Querschnitt, dessen Längsachse sich in Durchströmrichtung erstreckt. Die Dicke der Stege 43, 44 ist hierbei so klein bemessen, dass die Stege 43, 44 die Durchströmung der Ringscheiben 41, 42 nicht stören. Die an den Stegen 43, 44 befestigten Hülsen 45, 46 sind durch eine Stange 47 miteinander verbunden, die an den Hülsen 45, 46 befestigt ist.

An der dem Messrohr 30 benachbarten Ringscheibe 42 ist ein Rohrstück 48 befestigt, das den gleichen Innendurchmesser wie die Ringscheibe 42 hat und sich bis in die Nähe der Ringscheibe 41 erstreckt. Zwischen dem Rohrstück 48 und der Ringscheibe 41 verbleibt ein kleiner Spalt 49, der gerade so groß bemessen ist, dass es infolge von Schwingungen des Verdichtergehäuses 2 nicht zu einer Berührung zwischen der Ringscheibe 41 und dem Rohrstück 48 kommt. Der Außendurchmesser des Rohrstücks 48 ist kleiner als der Innendurchmesser des Faltenbalgs 38, damit auch radiale Schwingungen des Auslasskanals 23 ungehindert möglich sind, ohne dass der Faltenbalg 38 das Rohrstück 48 berührt.

Während eines Messlaufs steigt der Luftdruck im Auslasskanal 23 des Verdichters und im Messrohr 30 auf bis zu 2 bar an. Unter der Wirkung des ansteigenden Luftdrucks hat der Faltenbalg 38 das Bestreben, seine axiale Länge zu vergrößern. Dies hätte zur Folge, dass mit steigendem Luftdruck die federnde Lagerung des Systems zur Messung der Unwucht einseitig belastet und dadurch in seiner Funktion gestört würde. Durch die Fesselvorrichtung 40 wird eine unzulässige Verlängerung des Faltenbalges 38 und eine dadurch verursachte Störung der Funktion des Unwuchtmesssystems vermieden. Die Fesselvorrichtung 40 ist aber nicht vollkommen starr, sondern muss in ihrer Federsteifigkeit so abgestimmt sein, dass sie die unwuchtbedingten Schwingungen der Turbolader-Rumpfgruppe 4 nicht behindert. Die geeignete Federsteifigkeit der Fesselvorrichtung 40 wird durch eine federnde Nachgiebigkeit der Stege 43, 44 in axialer Richtung erreicht, die jedoch nicht so groß sein darf, dass eine unzulässige Verlängerung des Faltenbalges 38 eintreten kann. In der Praxis hat sich gezeigt, dass eine zufriedenstellende Auslegung der Fesselvorrichtung 40 mit einer Eigenfrequenz erreicht werden kann, die durch die Messfrequenzen überschritten wird und daher die Unwuchtmessung nicht beeinträchtigt.

Die Messung der Druckpulsationen hinter dem Verdichter kann mit der beschriebenen Vorrichtung gleichzeitig mit der Messung der Unwucht der Turbolader-Rumpfgruppe 4 erfolgen. Die von dem Druckaufnehmer 33 erzeugten Messsignale werden einem Auswerte- und Analysesystem übermittelt, welches durch Vergleich der gemessenen Werte mit vorgegebenen Vergleichswerten einen Qualitätskennwert ermittelt.

## Patentansprüche

1. Verfahren zum Messen physikalischer Eigenschaften an einer Turbolader-Rumpfgruppe (4), die ein Mittelgehäuse (5) und einen Rotor (6) mit einem Turbinenrad (7), einem Verdichterrad (8) und einer in dem Mittelgehäuse (5) gelagerten Welle umfasst, bei welchem Verfahren die Turbolader-Rumpfgruppe (4) in eine Unwuchtmessvorrichtung eingespannt und mit einem Verdichtergehäuse (2) verbunden wird, der Rotor (6) auf eine im wesentlichen normale Arbeitsgeschwindigkeit beschleunigt wird und durch Unwucht induzierte Schwingungen der Turbolader-Rumpfgruppe (4) gemessen werden, **dadurch gekennzeichnet, dass** der bei beschleunigtem Rotor (6) komprimierte Luftstrom am Ausgang (23) des Verdichtergehäuses (2) durch ein Messrohr geleitet wird und Druckpulsationen im komprimierten Luftstroms gemessen und ausgewertet werden.

2. Verfahren nach Anspruch 1, **gekennzeichnet durch** die Schritte:
Lagerung des Mittelgehäuses (5) in wenigstens zwei Raumrichtungen bewegbar mittels weicher Federn (25) an einem Maschinenbett (3),
Verbinden des Mittelgehäuses (5) mit einem das Verdichterrad (8) umgebenden Verdichtergehäuse (2),
Verbinden des Ausgangs des Verdichtergehäuses (2) **durch** ein flexibles Zwischenstück (34) mit dem am Maschinenbett (3) befestigten Messrohr (30),
Anordnen eines das Turbinenrad (7) umgebenden Turbinengehäuses (1) an der Turbinenseite des Mittelgehäuses (5),
Verbinden des Turbinengehäuses (1) mit einer Druckluftquelle und Beschleunigen des Rotors (6) **durch** Antreiben des Turbinenrads (7) mit Druckluft auf eine im wesentlichen normale Arbeitsgeschwindigkeit,
Messen der **durch** Unwucht induzierten Schwingungen des Mittelgehäuses (5) und der Druckpulsationen im Messrohr (30), während der Rotor (6) mit einer im wesentlichen normalen Arbeitsgeschwindigkeit dreht,
Bestimmung der Phasenlage der **durch** Unwucht induzierten Schwingungen zur Winkellage des Rotors (6) bei den Messdrehzahlen, bei denen die **durch** Unwucht induzierten Schwingungen gemessen werden,
Verwendung der gemessenen, **durch** Unwucht induzierten Schwingungen und der Phasenlage, um die auszugleichende Unwucht des Rotors (6) zu bestimmen und
Vergleichen der gemessenen Druckpulsationen mit vorgegebenen Vergleichswerten zur Bestimmung eines Qualitätswerts.

3. Vorrichtung zum Messen der Unwucht des Rotors einer Turbolader-Rumpfgruppe (4), bei welcher der Rotor (6) ein Turbinenrad (7), ein Verdichterrad (8) und eine Welle aufweist, die in einem Mittelgehäuse (5) der Turbolader-Rumpfgruppe (4) gelagert ist, mit einer das Mittelgehäuse (5) aufnehmenden Lagerung, die mittels weicher Federn (25) in wenigstens zwei Raumrichtungen bewegbar an einem Maschinenbett (3) abgestützt ist, mit einem zur Aufnahme des Verdichterrads (8) ausgebildeten Verdichtergehäuse (2), das mittels einer Spannvorrichtung (24) an dem Mittelgehäuses (5) festspannbar ist, einer Einrichtung zum Beschleunigen des Rotors (6) auf eine im wesentlichen normale Arbeitsgeschwindigkeit und Schwingungsaufnehmern (26, 27) zum Messen der durch Unwucht induzierten Schwingungen des Mittelgehäuses (5), **gekennzeichnet durch** ein Messrohr (30), das über ein flexibles Zwischenstück (34) mit dem Ausgang des Verdichtergehäuses (2) verbunden ist und einen Druckaufnehmer (33) zum Messen von Druckpulsationen eines **durch** das Messrohr (30) geleiteten Luftstroms ausgebildet ist.

4. Vorrichtung nach Anspruch 3, **dadurch gekennzeichnet, dass** das flexible Zwischenstück (34) einen Faltenbalg (38) aufweist, der in Richtung seiner Achse durch eine quer zur Achse federnd nachgiebige Fesselvorrichtung (40) an einer Längenänderung gehindert ist.

5. Vorrichtung nach Anspruch 4, **dadurch gekennzeichnet, dass** die Fesselvorrichtung (40) an den Enden des Faltenbalgs (38) seinen Strömungskanal durchquerende Stege aufweist, die durch eine sich axial erstreckende Stange miteinander verbunden sind.

6. Vorrichtung nach einem der Ansprüche 4 oder 5, **dadurch gekennzeichnet, dass** in dem Faltenbalg (38) ein das Messrohr (30) verlängerndes Rohrstück (48) angeordnet ist, das von dem Ende des Faltenbalgs (38), das mit dem Ausgang des Verdichtergehäuses (2) verbunden ist, durch einen Ringspalt (49) getrennt ist.

7. Vorrichtung nach einem der Ansprüche 3 bis 6, **gekennzeichnet durch** ein zur Aufnahme des Turbinenrads (7) ausgebildetes Turbinengehäuse (1), das so ausgebildet ist, dass es zum Beschleunigen des Rotors (6) **durch** Antreiben des Turbinenrads (7) mittels Druckluft mit einer Druckluftquelle verbindbar ist.

8. Vorrichtung nach einem,der Ansprüche 3 bis 7, **dadurch gekennzeichnet, dass** das Turbinengehäuse (1) so ausgebildet ist, dass es an der Turbinenseite des Mittelgehäuses (5) in einem Bewegungen des Mittelgehäuses (5) und des Turbinenrads (7) in den wenigstens zwei Raumrichtungen zulassenden Abstand von diesen am Maschinenbett (3) befestigbar ist.

9. Vorrichtung nach einem der Ansprüche 3 oder 8, **dadurch gekennzeichnet, dass** am Turbinengehäuse (1) eine flexible Dichtung angebracht ist, die so aus gebildet ist, dass sie dichtend mit dem Mittelgehäuse (5) verbindbar ist.

## Claims

1. Method for the measurement of physical properties of a turbocharger core assembly (4), which comprises a central housing (5) and a rotor (6) with a turbine wheel (7), a compressor wheel (8) and a shaft mounted in the central housing (5), in which method the turbocharger core assembly (4) is clamped in an unbalance measurement device and connected to a compressor housing (2), the rotor (6) is accelerated to a substantially normal operating speed and unbalance-induced vibrations of the turbocharger core assembly (4) are measured, **characterised in that** the air stream, which is compressed when the rotor (6) is accelerated, is guided through a measuring tube at the output (23) of the compressor housing (2) and pressure pulsations in the compressed air stream are measured and evaluated.

2. Method according to claim 1, **characterised by** the steps of:
mounting the central housing (5) on a machine base (3) by means of flexible springs (25) so as to be movable in at least two spatial directions,
connecting the central housing (5) to a compressor housing (2) which surrounds the compressor wheel (8),
connecting the output of the compressor housing (2) to the measurement tube (30), which is fastened to the machine bed (3), via a flexible connecting piece (3d), arranging a turbine housing (1), which surrounds the turbine wheel (7), on the turbine side of the central housing (5),
connecting the turbine housing (1) to a compressed air source and accelerating the rotor (6) to a substantially normal operating speed by driving the turbine wheel (7) with compressed air,
measuring the unbalance-induced vibrations of the central housing (5) and the pressure pulsations in the measuring tube (30) while the rotor (6) rotates at a substantially normal operating speed,
determining the phase position of the unbalance-induced vibrations relative to the angular position of the rotor (6) at the measured rotational speeds at which the unbalance-induced vibrations are measured.
using the measured unbalance-induced vibrations and the phase position to determine the unbalance of the rotor (6) which is to be balanced, and
comparing the measured pressure pulsations with predetermined comparison values to determine a quality index.

3. Device for the measurement of the unbalance of the rotor of a turbocharger core assembly (4), in which the rotor (6) comprises a turbine wheel (7), a compressor wheel (8) and a shaft which is mounted in the central housing (5) of the turbocharger core assembly (4), with a mounting which receives the central housing (5) and is supported on a machine base (3) by means of flexible springs (25) so as to be movable in at least two spatial directions, with a compressor housing (2) which is formed so as to receive the compressor wheel (8), and can be clamped in place on the central housing (5) by a clamping means (24), a means for accelerating the rotor (6) to a substantially normal operating speed, and vibration sensors (26, 27) for measuring the unbalance-induced vibrations of the central housing (5), **characterised by** a measurement tube (30), which is connected to the output of the compressor housing (2) via a flexible connecting piece (34) and comprises a pressure sensor (33) which is designed for measuring pressure pulsations in an air stream guided through the measurement tube (30).

4. Device according to claim 3, **characterised in that** the flexible connecting piece (34) comprises a bellows (38) which is prevented from changing length in the direction of the axis thereof by a constraining means (40) which is resiliently flexible transversely to the axis.

5. Device according to claim 4, **characterised in that** the constraining means (40) comprises webs which cross the flow channel of the bellows (38) at the ends thereof and are interconnected by an axially extending rod.

6. Device according to either claim 4 or claim 5, **characterised in that** a tube portion (48) which extends the measurement tube (30) is arranged in the bellows (38) and is separated by an annular gap (49) from the end, connected to the output of the compressor housing (2), of the bellows (38).

7. Device according to any one of claims 3 to 6, **characterised by** a turbine housing (1) which is formed so as to receive the turbine wheel (7) and designed so that it can be connected to a compressed air source in order to accelerate the rotor (6) by driving the turbine wheel (7) with compressed air.

8. Device according to any one of claims 3 to 7, **characterised in that** the turbine housing (1) is designed so that it can be fastened to the machine base (3) on the turbine side of the central housing (5) at such a distance from the central housing (5) and the turbine wheel (7) as to permit movements thereof in the at least two spatial directions.

9. Device according to any one of claims 3 to 8, **characterised in that** a flexible seal is applied to the turbine housing (1) and is designed so that it can be connected in a sealing manner to the central housing (5).

## Revendications

1. Procédé pour la mesure de propriétés physiques d'un noyau de turbocompresseur (4), lequel noyau comprend un carter central (5) et un rotor (6) comportant une roue de turbine (7), une roue de compression (8) et un arbre logé dans le carter central (5), dans lequel procédé le noyau de turbocompresseur (4) est serré dans un dispositif de mesure du balourd et est relié à un carter de compression (2), le rotor (6) est accéléré à une vitesse de travail sensiblement normale et les oscillations du noyau du turbocompresseur (4), induites par le balourd, sont mesurées, **caractérisé en ce que** le courant d'air comprimé par le rotor accéléré (6) est envoyé à la sortie (23) du carter de compression (2) à travers un tube de mesure et les pulsations de pression dans le courant d'air comprimé sont mesurées et évaluées,

2. Procédé selon la revendication 1, **caractérisé par** les étapes :
logement du carter central (5) sur un bâti de machine (3) mobile dans au moins deux directions spatiales au moyen de ressorts souples (25),
liaison du carter central (5) à un carter de compression (2) entourant la roue de compression (8),
raccordement de la sortie du carter de compression (2) au tube de mesure (30) fixé au bâti de machine (3) par l'intermédiaire d'un raccord flexible (34),
mise en place d'un carter de turbine (1) entourant la roue de turbine (7) sur la face de turbine du carter central (5),
raccordement du carter de turbine (1) à une source d'air comprimé et accélération du rotor (6) par entraînement de la roue de turbine (7) au moyen d'air comprimé à une vitesse de travail sensiblement normale,
mesure des oscillations du carter central (5) induites par le balourd, et des pulsations de pression dans le tube de mesure (30), pendant que le rotor (6) tourne à une vitesse de travail sensiblement normale,
détermination de la position de phase des oscillations induites par le balourd par rapport à la position angulaire du rotor (6) pour les vitesses de rotation de mesure avec lesquelles les oscillations induites par le balourd sont mesurées,
utilisation des oscillations mesurées, induites par le balourd, et de la position de phase pour déterminer le balourd à équilibrer du rotor (6) et
comparaison les pulsations de pression mesurées à des valeurs de comparaisons prédéfinies pour déterminer une valeur de qualité.

3. Dispositif de mesure du balourd du rotor d'un noyau de turbocompresseur (4), dans lequel noyau le rotor (6) comprend une roue de turbine (7), une roue de compression (8) et un arbre logé dans un carter central (5) du noyau de turbocompresseur (4), comportant un palier pouvant loger le carter central (5) et en appui contre un bâti de machine (3) de façon mobile dans au moins deux directions spatiales au moyen de ressorts souples (25), comportant un carter de compresseur (2) conçu pour loger la roue de compression (8) et pouvant être serré contre le carter central (5) au moyen d'un dispositif de serrage (24), comportant un dispositif permettant d'accélérer le rotor (6) à une vitesse de travail sensiblement normale et des capteurs d'oscillations (26, 27) pour mesurer les oscillations du carter central (5) induites par le balourd, **caractérisé par** un tube de mesure (30) raccordé par un raccord flexible (34) à la sortie du carter de compression (2) et comprenant un capteur de pression (33) conçu pour mesurer des pulsations de pression d'un courant d'air envoyé à travers le tube de mesure (30).

4. Dispositif selon la revendication 3, **caractérisé en ce que** le raccord flexible (34) comprend un soufflet (38) dont la longueur est empêchée de varier en direction de son axe à l'aide d'un dispositif d'entrave (40) élastiquement flexible transversalement à l'axe.

5. Dispositif selon la revendication 4, **caractérisé en ce que** le dispositif d'entrave (40) comprend aux extrémités du soufflet (38) des ponts traversant son canal d'écoulement et reliés ensemble par une barre s'étendant axialement.

6. Dispositif selon l'une des revendications 4 ou 5, **caractérisé en ce qu'**un élément tubulaire (48) allongeant le tube de mesure (30) est disposé dans le soufflet (38) et est séparé par une fente annulaire (49) de l'extrémité du soufflet (38) reliée à la sortie du carter de compression (2).

7. Dispositif selon l'une des revendications 3 à 6, **caractérisé par** un carter de turbine (1) conçu pour loger la roue de turbine (7) et conçu de telle sorte qu'il puisse être raccordé à une source d'air comprimé pour accélérer le rotor (6) par entraînement de la roue de turbine (7) au moyen de l'air comprimé.

8. Dispositif selon l'une des revendications 3 à 7, **caractérisé en ce que** le carter de turbine (1) est conçu de telle sorte qu'il puisse être fixé sur la face de turbine du carter central (5) sur le bâti de machine (3) à une certaine distance admettant des déplacements du carter central (5) et de la roue de turbine (7) dans les deux directions spatiales au moins.

9. Dispositif selon l'une des revendications 3 à 8, **caractérisé en ce qu'**un joint flexible est disposé sur le carter de turbine (1), lequel joint est conçu de telle sorte qu'il peut être relié de manière étanche au carter central (5).
